# EUROPEAN PATENT APPLICATION

(11) **EP 1 494 406 A2**
(43) Date of publication of application: **05.01.2005**
(21) Application number: 04102496.9
(22) Date of filing: 03.06.2004
(51) Int. Cl.: H04L 12/56

(54) **Cross-coupled bi-delta network**

(30) Priority: 30.06.2003 US 611782
(71) Applicant: MOTOROLA, INC., Schaumburg, IL 60196 (US)
(72) Inventor: Wise, Jeffrey L., Acton, Massachusetts 01720 (US); Hauser, Stephen, Acton, Massachusetts 01720 (US)
(74) Representative: Cross, Rupert Edward Blount

(57) **Abstract**

A network and method include communicating among a plurality of left end-node devices (106) across a Clos network (222), communicating between the plurality of left end-node devices and a plurality of right end-node devices (108) across a bi-delta network (221), and communicating among the plurality of right end node devices across a mesh network (323), wherein the Clos network, the bi-delta network and the mesh network are superimposed to operate among a plurality of left side switches (102) and a plurality of right side switches (104).

## Description

### Background of the Invention

Current switching topologies for client/server operations can cause a network to suffer performance degradation due to latency. This is especially true for a network connecting data-centers that include relatively numerous application servers and relatively few database servers. Prior art networks coupling such data-centers include a series of switches and routers that are non-optimized for the specific needs of each type of server environment. This causes unnecessary latency between servers. Another disadvantage of prior art networks is that the connectivity between each server environment and between the servers in each specific environment is non-optimized such that congestion can result that further increases latency and slows network response time.

Accordingly, there is a significant need for an apparatus and method that overcomes the deficiencies of the prior art outlined above.

### Brief Description of the Drawings

Referring to the drawing:
FIG. 1 depicts a network according to one embodiment of the invention;
FIG.2 depicts a network according to another embodiment of the invention;
FIG.3 depicts a network according to yet another embodiment of the invention;
FIG.4 depicts a network according to still another embodiment of the invention;
FIG. 5 depicts a network according to still yet another embodiment of the invention;
FIG.6 depicts a network according to an embodiment of the invention;
FIG. 7 illustrates a flow diagram of a method of the invention according to an embodiment of the invention; and
FIG.8 illustrates a flow diagram of a method of the invention according to another embodiment of the invention.

It will be appreciated that for simplicity and clarity of illustration, elements shown in the drawing have not necessarily been drawn to scale. For example, the dimensions of some of the elements are exaggerated relative to each other. Further, where considered appropriate, reference numerals have been repeated among the Figures to indicate corresponding elements.

### Description of the Preferred Embodiments

In the following detailed description of exemplary embodiments of the invention, reference is made to the accompanying drawings (where like numbers represent like elements), which illustrate specific exemplary embodiments in which the invention may be practiced. These embodiments are described in sufficient detail to enable those skilled in the art to practice the invention, but other embodiments may be utilized and logical, mechanical, electrical and other changes may be made without departing from the scope of the present invention. The following detailed description is, therefore, not to be taken in a limiting sense, and the scope of the present invention is defined only by the appended claims.

In the following description, numerous specific details are set forth to provide a thorough understanding of the invention. However, it is understood that the invention may be practiced without these specific details. In other instances, well-known circuits, structures and techniques have not been shown in detail in order not to obscure the invention.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact. However, "coupled" may mean that two or more elements are not in direct contact with each other, but yet still co-operate or interact with each other.

For clarity of explanation, the embodiments of the present invention are presented, in part, as comprising individual functional blocks. The functions represented by these blocks may be provided through the use of either shared or dedicated hardware, including, but not limited to, hardware capable of executing software. The present invention is not limited to implementation by any particular set of elements, and the description herein is merely representational of one embodiment.

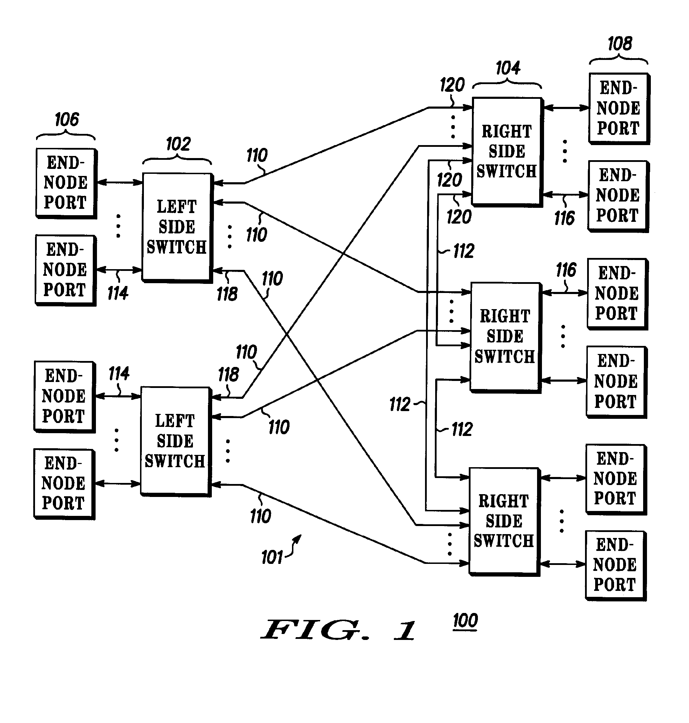

FIG. 1 depicts a network 100 according to one embodiment of the invention. In an embodiment, the network shown in FIG. 1 can be a cross-coupled bi-delta network 101. Network 100 can be used to provide highly effective, client/server switching for data-center operations. Cross-coupled bi-delta network 101 is an asymmetric packet switching network that overlays three switching topologies on one set of switches, one topology for each of three traffic flow patterns. In an embodiment, cross-coupled bi-delta network 101 can be implemented in one or more chassis in a backplane-type interconnect environment. In another embodiment, cross-coupled bi-delta network 101 can be implemented on the same switching board or switching chip.

Cross-coupled bi-delta network 101 can have two sets of non-blocking switches, plurality of left side switches 102 and plurality of right side switches 104. Each switch presents some of its bi-directional ports to the other group of switches and the rest to end-node devices. Plurality of left side switches 102 can be coupled to plurality of right side switches 104 by first plurality of bi-directional links 110. In an embodiment, each of the plurality of left side switches 102 are bi-directionally coupled to each of the plurality of right side switches 104. However, plurality of left side switches 102 are not connected directly to each other. This creates a bi-directional delta network (bi-delta network). In addition to the bi-delta network, plurality of right side switches 104 can be connected to each other directly by second plurality of bi-directional links 112, creating a full mesh network among plurality of right side switches 104. Second plurality of bi-directional links 112 provide cross-coupling among plurality of right side switches 104.

In an embodiment, two or more of plurality of left side switches 102 may be implemented within a single switching entity, for example a single switching chip, physical switching unit, and the like. Also, two or more of plurality of right side switches 104 may be implemented within a single switching entity. In another embodiment, one or more of plurality of left side switches 102 may not be mixed or implemented with one or more of plurality of right side switches 104 in the same switching entity.

First plurality of bi-directional links 110 are coupled to each of plurality of left side switches 102 at left side switch interlink ports 118. First plurality of bi-directional links 110 and second plurality of bi-directional links 112 are coupled to each of plurality of right side switches 104 right side switch interlink ports 120.

The first plurality of bi-directional links 110 and second plurality of bi-directional links 112 for coupling plurality of left side switches 102 and plurality of right side switches 104 can use, for example and without limitation, 100 ohm differential transmit and receive pairs per channel. Each channel can use high-speed serialization/deserialization (SERDES) and 8b/10b encoding.

Cross-coupled bi-delta network 101 can have end-node ports organized in two groups on either side of the network 100. In the embodiment shown, each of plurality of left side switch end-node ports 114 can be coupled to one or more of plurality of left end-node devices 106. Also, each of plurality of right side switch end-node ports 116 can be coupled to one or more of plurality of right end-node devices 108. Plurality of left end-node devices 106 and plurality of right end-node devices 108 can be, for example and without limitation, application servers, database servers, and the like. In a preferred embodiment, plurality of left end-node devices 106 are application servers and plurality of right end-node devices 108 are database servers.

Network 100 may utilize any packet data protocol for traffic movement among switches and end-node devices. For example, network 100 may use Internet Protocol (IP), Asynchronous Transfer Mode (ATM), Synchronous Optical Network (SONET), Ethernet, Infiniband, RapidIO, and the like. As such, network 100 utilizes data packets having fixed or variable length, defined by the applicable protocol.

In cross-coupled bi-delta network 101, traffic can flow in one of three ways. The first traffic flow is from a left side switch end-node port 114 to another left side switch end-node port 114 (left-side traffic). An example of this is one of the plurality of left end-node devices 106 sending/receiving traffic from another one of the plurality of left end-node devices 106. The second traffic flow pattern is from a left side switch end-node port 114 to a right side switch end-node port 116 or from a right side switch end-node port 116 to a left side switch end-node port 114 (side-to-side traffic). An example of this is one of the plurality of left end-node devices 106 sending/receiving traffic from one of the plurality of right end-node devices 108. The third traffic flow pattern is from a right side switch end-node port 116 to another right side switch end-node port 116 (right-side traffic). An example of this is one of the plurality of right end-node devices 108 sending/receiving traffic from another one of the plurality of right end-node devices 108. Embodiments illustrating each of the traffic flow patterns are illustrated in the following Figures.

Although FIG. 1 depicts 2 left side switches 102 and three right side switches 104, any number of left side switches 102 and right side switches 104 are within the scope of the invention. Also, any number of left side switch end-node ports 114 and right side switch end-node ports 116 are within the scope of the invention. Further, any number of left side switch interlink ports 118 and right side switch interlink ports 120 are within the scope of the invention. Still further, any number of left end-node devices 106 and right end-node devices 108 are within the scope of the invention. It is also desired to be understood that the labels "left" and "right" are merely reference labels for various groups of elements and not meant to limit the invention to any particular spatial relationship between the elements depicted.

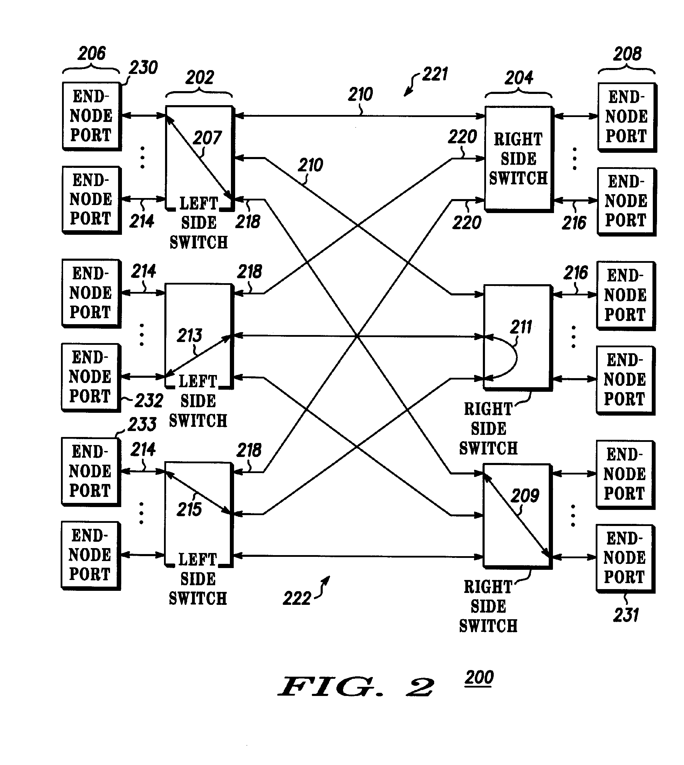

FIG.2 depicts a network 200 according to another embodiment of the invention. The network 200 depicted in FIG.2 is a cross-coupled bi-delta network, with the second plurality of bi-directional links 112 not shown for clarity in order to illustrate some of the switching topologies used in the cross-coupled bi-delta network.

In one embodiment, network 200 is a bi-delta network 221 for side-to-side traffic. When traffic moves from one of the plurality of left side switches 202 to one of the plurality of right side switches 204, or visa-versa, this side-to-side traffic uses bi-delta network 221. Moving directly across bi-delta network 221 takes two switch hops. A switch hop is defined as traffic going into a switch and emerging from a switch.

An example of this embodiment is illustrated in FIG.2. Traffic originating at left end-node device 230 enters the one of the plurality of left side switches 202 through one of left side switch end-node ports 214, passes through internal switch link 207, out through one of left side switch interlink ports 218 (1^{st} switch hop). Traffic proceeds to one of right side switch interlink ports 220 via one of first plurality of bi-directional links 210. Traffic crosses through internal switch link 209 of one of plurality of right side switches 204, out through right side switch end-node port 216 (2^{nd} switch hop) to right end-node device 231.

Although only one of first plurality of bi-directional links 210 is shown between each of plurality of left side switches 202 and each of plurality of right side switches 204, the invention is not limited to one bi-directional link. In other embodiments there can be more than one of first plurality of bi-directional links 210 between each of plurality of left side switches 202 and each of plurality of right side switches 204. The number of first plurality of bi-directional links 210 between each pairing of plurality of left side switches 202 and plurality of right side switches 204 compared to the number of end-node ports on each switch determines the degree of congestion potentially experienced by traffic crossing bi-delta network 221. For example, if there are an equal number of left side switch end-node ports 214 on a left side switch as there are left side switch interlink ports 218, then bi-delta network 221 is a constant bi-section bandwidth bi-delta network. Similarly, the number of right side switch end-node ports 216 on a right side switch compared to the number of right side switch interlink ports 220 influences the degree of congestion.

In another embodiment, network 200 is a Clos network 222 for left-side traffic. When traffic moves from one of the plurality of left side switches 202 to another one of the plurality of left side switches 202 this left-side traffic uses Clos network 222. Clos network 222 is a two tier hierarchical network in which each node in the first tier connects to each node in the second tier. In the embodiment shown in FIG.2, plurality of left side switches 202 can be considered the first tier and plurality of right side switches 204 can be considered the second tier.

An example of this embodiment is illustrated in FIG.2. Traffic originating at left end-node device 232 enters the one of the plurality of left side switches 202 through one of left side switch end-node port 214, passes through internal switch link 213, out through one of left side switch interlink ports 218 (1^{st} switch hop). Traffic proceeds to one of right side switch interlink ports 220 via one of first plurality of bi-directional links 210. Traffic crosses through internal switch link 211 of one of plurality of right side switches 204, out through one of right side switch interlink ports 220 (2^{nd} switch hop) and back to one of plurality of left side switches 202, through internal switch link 215 and to left end-node device 233.

Although only one of first plurality of bi-directional links 210 is shown between each of plurality of left side switches 202 and each of plurality of right side switches 204, the invention is not limited to only one bi-directional link. In other embodiments there can be more than one of first plurality of bi-directional links 210 between each of plurality of left side switches 202 and each of plurality of right side switches 204. The number of first plurality of bi-directional links 210 between each pairing of plurality of left side switches 202 and plurality of right side switches 204 compared to the number of end-node ports on each switch determines the degree of blocking potentially experienced by traffic crossing Clos network 222. For example, if there are an equal number of left side switch end-node ports 214 on a left side switch as there are left side switch interlink ports 218, then Clos network 222 is a rearrangeably non-blocking Clos network for left-side traffic. A network is non-blocking if it has adequate internal resources to carry out all admissible traffic patterns, where admissible traffic patterns are traffic patterns in a switch where the traffic entering the switch does not exceed the switch's ability to output traffic. If the number of switch interlink ports 218 on a left side switch is equal to 2*(number of left side switch end-node ports 214 on the left side switch) -1, then Clos network 222 is a strictly non-blocking Clos network.

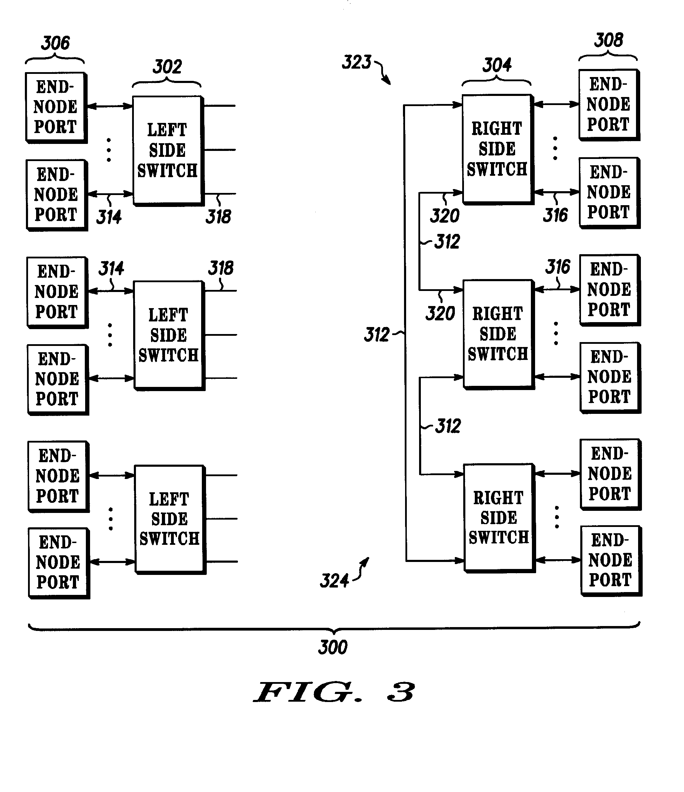

FIG.3 depicts a network 300 according to yet another embodiment of the invention. The network 300 depicted in FIG.3 is a cross-coupled bi-delta network, with the first plurality of bi-directional links 110 not shown for clarity in order to illustrate some of the switching topologies used in the cross-coupled bi-delta network.

In one embodiment, network 300 is a mesh network 323 for right-side traffic. A mesh network has at least one bi-directional link between each pair of switches. When traffic moves from one of the plurality of right side switches 304 to another one of the plurality of right side switches 304 this right-side traffic uses mesh network 323. Because each of the plurality of right side switches 304 are directly connected, right-side traffic will encounter no more than two switching hops in going from one the plurality of right end-node devices 308 to another one of the plurality of right end-node devices 308.

In the embodiment depicted in FIG.3, network 300 is a full mesh for right-side traffic. Mesh network 323 includes full mesh networks and logical mesh networks, where logical mesh networks do not necessarily have each switch directly connected to every other switch.

The amount of congestion experienced by right-side traffic as it passes through network 300 depends, in part, on the number of second plurality of bi-directional links 312 connecting each of plurality of right side switches 304. The least amount of connectivity, as represented in the embodiment of FIG.3, results in a full-mesh. In this minimal full-mesh there is only one of second plurality of bi-directional links 312 connecting each pair of plurality of right side switches 304, regardless of the number of right side switch end-node ports 316 at each right side switch. The more numerous the right side switch end-node ports 316, the greater the risk of congestion on second plurality of bi-directional links 312.

In an embodiment depicted in FIG.3, there are an equal number of second plurality of bi-directional links 312 connecting each pair of plurality of right side switches 304 as there are right side switch end node ports 316 attached to each right side switch. In other words, for each of plurality of right side switches 304, there are an equal number of right side switch interlink ports 320 with corresponding bi-directional link 312, and right side switch end-node ports 316 with corresponding right end-node devices 308. In this configuration, mesh network 323 is a constant bandwidth mesh network 324. For right-side traffic flows that distribute themselves equally among the second plurality of bi-directional links 312, the constant bandwidth mesh network 324 has enough bandwidth to convey all of the right-side traffic among the plurality of right side switches 304 without congestion. However, most right-side traffic patterns will not distribute themselves evenly among the second plurality of bi-directional links 312. In other words, it is possible for a given right-side traffic pattern to overload one of second plurality of bi-directional links 312 while under utilizing other of second plurality of bi-directional links 312.

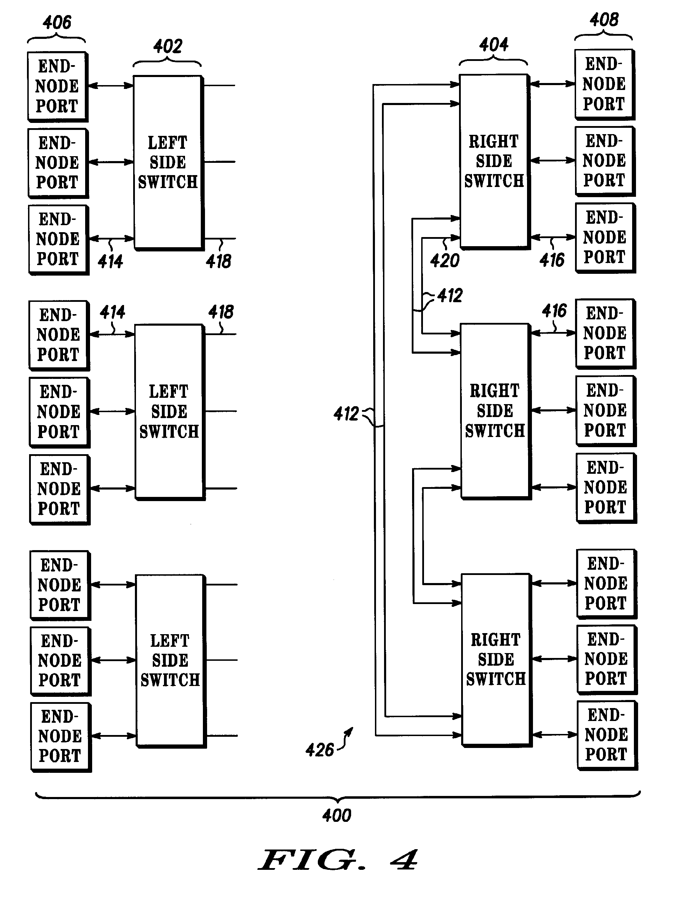

FIG.4 depicts a network 400 according to still another embodiment of the invention. The network 400 depicted in FIG.4 is a cross-coupled bi-delta network, with the first plurality of bi-directional links 110 not shown for clarity in order to illustrate some of the switching topologies used in the cross-coupled bi-delta network.

In an embodiment, network 400 is a rearrangeably non-blocking mesh network 426 for right-side traffic. A network is a rearrangeably non-blocking mesh network 426 when there are more second plurality of bi-directional links 412 between each of the plurality of right side switches 404 than in the minimal mesh network 323. In other words, when the number of plurality of right side switches 404 multiplied by the number of right side switch interlink ports 420 connecting each pair of right side switches is greater than or equal to two times the number of right side switch end-node ports per right side switch, a network is a rearrangeably non-blocking mesh network 426. In effect, traffic from a given right end-node device 408 entering a right side switch though a right side switch end-node port 416 has more than one bi-directional link 312 to traverse to another right end-node device 408 through another right side switch 404. This allow for a lessening of congestion on the mesh network 400.

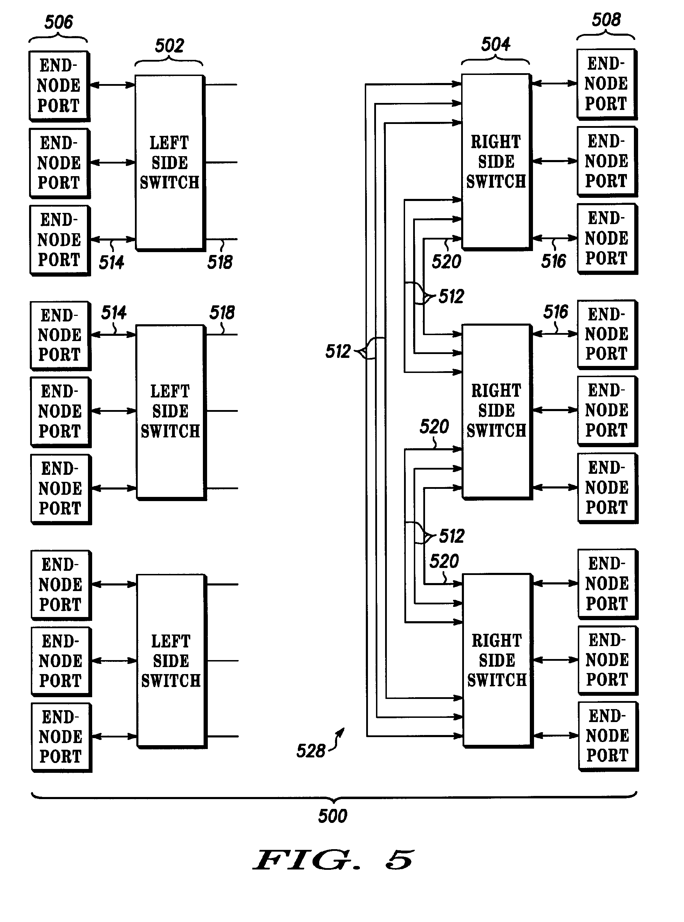

FIG. 5 depicts a network 500 according to still yet another embodiment of the invention. The network 500 depicted in FIG. 5 is a cross-coupled bi-delta network, with the first plurality of bi-directional links 110 not shown for clarity in order to illustrate some of the switching topologies used in the cross-coupled bi-delta network.

In an embodiment, network 500 is a fully non-blocking mesh network 528 since there is an equal number of right side switch interlink ports 520 and right side switch end node ports 516 on each right side switch 504. In other words there are an equal number of second plurality of bi-directional links 512 between each pair of right side switches 504 as there are right side switch end node ports 516 on each right side switch, where each of the right side switch end node ports 516 is coupled to at least one of the plurality of right end-node devices 508. Fully non-blocking mesh network 528 may be operated such that there is no congestion among right-side traffic of plurality of right end-node devices 508.

In the embodiment shown, there are three second plurality of bi-directional links 512 from each plurality of right side switches 504 to each other plurality of right side switches 504. This is the same number of bi-directional links as there are right end-node devices 508 coupled to each right side switch 504. In effect, there is three times the inter-switch bandwidth as end-node bandwidth. This "over-provisioning" creates the fully non-blocking mesh network 528 where congestion can be eliminated.

Each right end-node device 508 can use a different one of second plurality of bi-directional links 512 than other right end-node devices 508 attached to the same right side switch 504 to reach right end-node devices attached to other right side switches 504. Therefore, congestion can only occur at the right side switch end node port attaching the destination right end-node device to the network, which is where a flow of packets from different sources to different destinations cannot interfere with each other. This "output link" congestion does not lower the bandwidth of traffic heading to the destination right side end-node device, it merely sequences the traffic from multiple sources over the right side switch end node port headed toward the destination right end-node device. This configuration suffers no internal traffic blocking, therefore the network is a fully non-blocking mesh network 528.

In the present embodiment of a fully non-blocking mesh network 528, non-interference (i.e. internal non-blocking within a right side switch) can be established at bring-up time without any knowledge of the expected traffic patterns, and the non-blocking characteristic is not dependent on any aspect of the instantaneous traffic patterns that may be presented to the fully non-blocking mesh network 528. In other words, if a destination right end-node device is not receiving data at a given moment, the latency of a packet across the network 500 will be completely insensitive to any traffic in the network 500 headed to a different right end-node device 508.

Each right end-node device 508 has other right end-node devices 508 attached to the same right side switch 504 available a distance of one switch hop, while the right end-node devices 508 coupled to other right side switches 504 are available at a distance of two switch hops. Both the left-side traffic using the Clos network 222 and the right-side traffic using the fully non-blocking mesh network 528 pass through at least one of plurality of right side switches 504. Because the plurality of right side switches 504 are non-blocking switches, the left-side traffic does not interfere with the right-side traffic even though both pass through the same right side switch 504.

For fully non-blocking mesh network 528, there are alternate paths to each of right side switch end node ports 516. If one of the second plurality of bi-directional links 512 fails, there are other second plurality of bi-directional links 512 available between the right end-node device 508 pair. With a failed one of second plurality of bi-directional links 512, network 500 will no longer be fully non-blocking, but there will be enough bi-directional link bandwidth to provide acceptable performance. Another advantage of the present embodiment is that if right end-node devices are coupled by more than one second plurality of bi-directional links 512 to a different right side switch 504, then a failed right side switch can be removed and replaced without interrupting service or even going below a full path to each right end-node device 508.

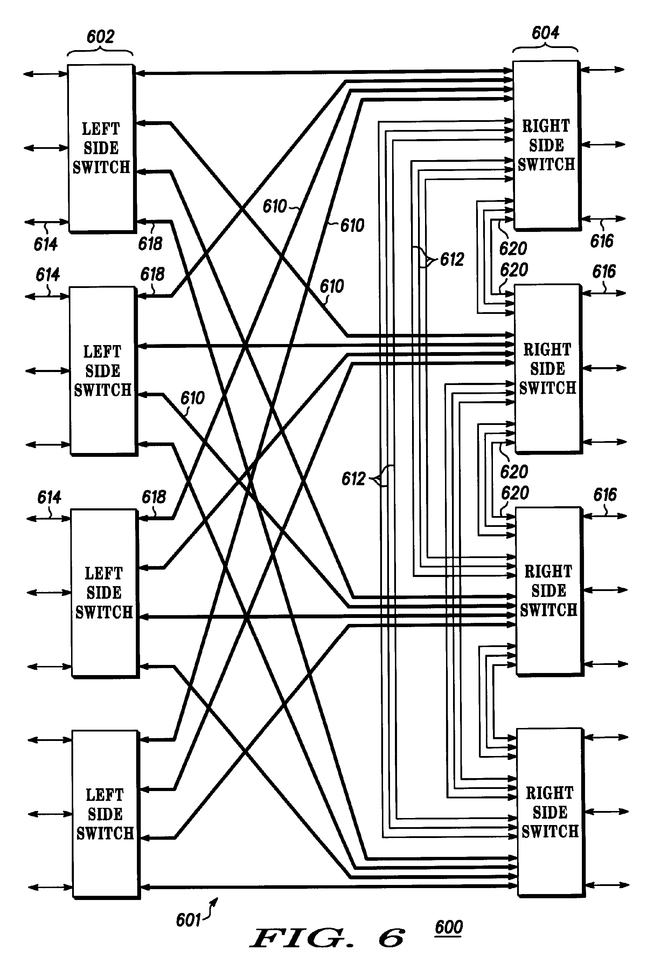

FIG.6 depicts a network 600 according to an embodiment of the invention. As shown in FIG.6, left end-node devices and right-end node devices are omitted for clarity. In an exemplary embodiment of the invention, cross-coupled bi-delta network 601 can be built using a 24-port Mellanox Anafa-III Infiniband Switch, manufactured by Mellanox Technologies, 2900 Stender Way, Santa Clara, CA 95054. The invention is not limited to the use of this switch and another type or model of non-blocking switch may be used and be within the scope of the invention.

When more than one bi-directional link is running between a pair of switches, these links may be operated in an aggregated mode where a logical link is formed of the sum of the original bi-directional link bandwidths. An example of this is the aggregation of four Infiniband "1x" links to form a "4x-link" and the aggregation of three 4x-links to form a 12x-link. The advantage of aggregating a number of links into a higher speed link is the better multiplexing efficiency that results from having a single flow of traffic at the higher, aggregated bandwidth. A disadvantage of aggregating links is the need for the switches to do store-and-forward switching instead of cut-through forwarding as the packets are sped up from the slower end-node port links to the faster interswitch links.

In the Anafa-II switch, three adjacent 4X speed ports can be aggregated into a 12X speed port to achieve a 12X link when desired. In the embodiment shown in FIG.6, cross-coupled bi-delta network 601 uses a fully non-blocking mesh network for traffic among the plurality of right side switches 604, a rearrangeably non-blocking Clos network for the left-side traffic and a bi-delta network for side-to-side traffic. Other arrangements of the Anafa-II switch can be made and be within the scope of the invention.

In the embodiment shown, plurality of left side switches 602 are arranged in constant bi-section bandwidth arrangement where there an equal number of left side switch end-node ports 614 on a left side switch as there are left side switch interlink ports 618. Each of plurality of left side switches 602 has twelve left side switch end-node ports 614 to interface with twelve left end-node devices (not shown for clarity). In the embodiment shown, 4x left side switch interlink ports 618 can be deployed in groups of three to make possible bi-directional link aggregation of 12x. This puts the number of right side switches 604 at four, each receiving three first plurality of bi-directional links 610 at 4x (or one 12x aggregated bi-directional link) from each plurality of left side switches 602. Symmetrically, there would have to be four left side switches too.

On each of the plurality of right side switches 604, three 4x ports can be used as right side switch end-node ports 616 to couple to three right end-node devices (not shown for clarity. Twelve 4x ports are used to connect to each of the plurality of left side switches 602 as described above. The remaining nine ports can be used as right side switch interlink ports 620 to connect to other right side switches via second plurality of bi-directional links 612 and create a fully non-blocking mesh among plurality of right side switches 604.

In the present embodiment shown in FIG.6, there can be up to forty-eight left end-node devices each coupled to a 4x left side switch end-node port 614. In another embodiment, there can be a mix of 4x and 12x left side switch end-node ports 614. In still another embodiment, there can be sixteen 12x left side switch end-node ports 614 coupled to left end-node devices. Right side switch end-node ports 616 can also be configured as three 4x right side switch end-node ports 616 or one 12x right side switch end-node port 616.

The embodiment shown in FIG.6 is optimized for computer clusters where there are two types of end-node devices and where there is many more of one kind than the other. Client/server networks and application server/database server networks are examples where there are many more clients than servers and many more application servers than database servers. The traffic between the clients and the servers (typically large file transfers) is much heavier than the inter-client traffic, and the database servers need very-low latency connectivity among themselves for relatively short but urgent messages. The cross-coupled bi-delta network 601 shown in the present embodiment is particularly well suited to serve this scenario.

In an embodiment, the network depicted in FIG.6 can have the left side switch end-node ports 614 coupled to relatively numerous application servers/database client computers (up to forty eight) and the right side switch end-node ports 616 coupled to relatively less numerous database server computers (up to twelve). The embodiment shown has first plurality of bi-directional links 610 aggregated into 12x links as shown by the thick lines, while the thinner lines of the second plurality of bi-directional links 612 represent non-aggregated 4x links. The invention is not limited by the bi-directional link configuration shown. Any of first plurality of bi-directional links 610 and second plurality of bi-directional links 612 can be aggregated or non-aggregated and be within the scope of the invention.

For left-side traffic, plurality of left side switches 602 operate as the first-tier switches and plurality of right side switches 604 operate as the second-tier switches of a rearrangeably non-blocking Clos network. Each left end-node device has eleven other left end-nodes devices at a distance of one switching hop (the other left end-node devices attached to the same left side switch 602) and thirty-six left end-node devices at three switching hops distance (left end-node devices attached to other left side switches 602). Note that for each left side switch 602, any of the four 12x first plurality of bi-directional links 610 can be used to reach any other left side switch 602. This multiplicity of paths to each destination provides path redundancy as well as constant bi-section bandwidth.

The rearrangeably non-blocking characteristic of network 600 refers to the possibility to connect all the left side switch end-node devices among themselves in any arbitrary pairing of dedicated 4x bandwidth, given that it may be necessary to move existing paths to add the next path. When there are persistent traffic patterns among the left side switch end-node device pairs, this characteristic can enable non-interfering routing of the traffic flows when used with an appropriate routing algorithm.

Because 12x links are used within network 600 to convey the left-side traffic, a store-and-forward delay is incurred as the packets make the 4x to 12x link-speed transition. This introduces a delay of from 2/3 to a whole packet serialization time at 4x link speed. Although the 12x links provide a bandwidth aggregation of 1:3 and consequently better statistical performance, the plurality of left side switches 602 may alternatively be configured as triple-4x links over these paths to allow cut-through forwarding of packets.

For right-side traffic, only two switch hops are encountered along any of these paths and there can be a guarantee of no interference on the first hop. Each right side switch end-node device has two right side switch end-node devices at a distance of one switch hop, and nine right side switch end-node devices at a distance of two switch hops.

This mesh of 4x-links is highly "over-provisioned" for the right side switch end-node devices attached to it. Each right side switch end-node device can only keep the equivalent of one of its three second plurality of bi-directional links 612 busy at a time. Considering the increased operating costs caused by slow inter-database server communications, the extra inter-switch links within the cross-coupled bi-delta network 601 are a small price to pay for "ideal" performance.

The left-side-to/from-right-side traffic uses the left and right tiers of switches as a constant bi-section bandwidth bi-delta network. There are two switching hops between end-node devices located on opposite sides of the network. Switching distance side-to-side across network 600 is shorter than the left-side traffic switching distance.

Any end-node device can reach any end-node device on the opposite side of the network 600 in just two switching hops. Every path crossing the bi-delta network transitions from a 4x-link to a 12x-link, and back to a 4x-link. The 4x to 12x transition each packet makes crossing the network 600 (at the first switching hop), requires from 2/3 to one 4x-link packet serialization time of storage before being forwarded, even if there is no link congestion. For large packets, this represents a significant delay, but the side-to-side traffic is not expected to be especially latency-sensitive.

As the side-to-side traffic approaches the right side switch end-node ports 616, it comes into competition with the right-side traffic for egress out to the destination right side switch end-node. Typically, the side-to-side traffic (i.e., the relatively latency insensitive, bulk traffic) would be arbitrated at a lower level in Virtual Lane (VL) arbitration than the right-side traffic (i.e., the relatively latency sensitive traffic) at the destination right side switch end node.

Across the bi-delta network, there is only one direct path between any pair of end-node devices (if the 12x inter-switch links of first plurality of bi-directional links 610 are operated as triple 4x links, there would be two alternate, direct-path 4x links). There are no redundant two-hop paths, but there are numerous higher hop-count paths that can be used in the event of a failure to maintain connectivity (if not bandwidth) through network 600.

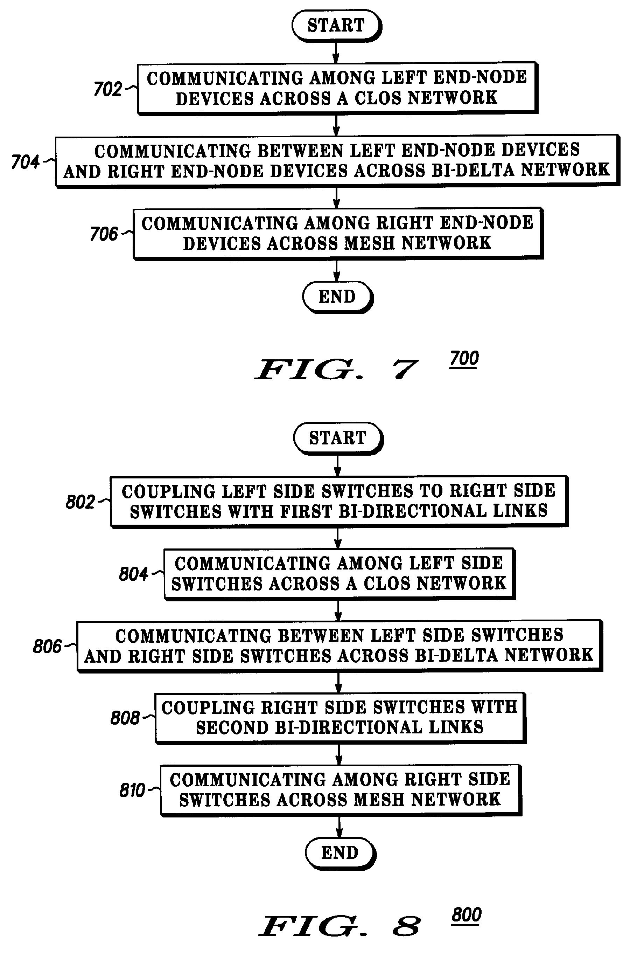

FIG.7 illustrates a flow diagram 700 of a method of the invention according to an embodiment of the invention. In step 702, plurality of left end-node devices are communicating across a Clos network. In step 704, plurality of left end-node devices and plurality of right end-node devices are communicating between each other across a bi-delta network. In step 706, plurality of right end-node devices are communicating among each other across a mesh network, where Clos network, bi-delta network and mesh network are coupled to operate among plurality of left side switches and plurality of right side switches. In an embodiment, Clos network, bi-delta network and mesh network are superimposed to operate among plurality of left side switches and plurality of right side switches.

FIG. 8 illustrates a flow diagram 800 of a method of the invention according to another embodiment of the invention. In step 802, plurality of left side switches are coupled to plurality of right side switches with first plurality of bi-directional links. In step 804, plurality of left side switches communicate among each other across a Clos network. In step 806, plurality of left side switches communicate with plurality of right switches across a bi-delta network. In step 808, plurality of right side switches are coupled to each other with second plurality of bi-directional links. In step 810, plurality of right side switches communicate among each other across a mesh network.

While we have shown and described specific embodiments of the present invention, further modifications and improvements will occur to those skilled in the art. It is therefore, to be understood that appended claims are intended to cover all such modifications and changes as fall within the true spirit and scope of the invention.

## Claims

1. A network, **characterized by**:
a plurality of left side switches (102); and
a plurality of right side switches (104), wherein each of the plurality of left side switches are bi-directionally coupled to each of the plurality of right side switches, and
wherein each of the plurality of right side switches are bi-directionally coupled to each other directly.

2. The network of claim 1, further **characterized by**:
a plurality of left end-node devices coupled to one or more of the plurality left side switches; and
a plurality of right end-node devices coupled to one or more of the plurality of right side switches.

3. The network of claim 2, wherein the plurality of left end-node devices communicate with each other across a Clos network.

4. The network of claim 3, wherein the Clos network is a strictly non-blocking network.

5. The network of claim 1, wherein the plurality of left side switches and the plurality of right side switches are bi-directionally coupled such that the network comprises a Clos network, a bi-delta network and a mesh network.

6. A method, **characterized by**:
communicating among a plurality of left end-node devices (106) across a Clos network (222);
communicating between the plurality of left end-node devices and a plurality of right end-node devices (108) across a bi-delta network (221); and
communicating among the plurality of right end node devices across a mesh network (323), wherein the Clos network and the bi-delta network and the mesh network are coupled to operate among a plurality of left side switches and a plurality of right side switches.

7. The method of claim 6, wherein communicating between the plurality of left end-node devices comprises the Clos network operating between the plurality of left side switches and the plurality of right side switches.

8. The method of claim 6, wherein communicating between the plurality of left end-node devices and the plurality of right end-node devices comprises the bi-delta network operating between the plurality of left side switches and the plurality of right side switches.

9. The method of claim 6, wherein communicating between the plurality of right end-node devices comprises the mesh network operating between the plurality of right side switches.

10. The method of claim 6, wherein the Clos network and the bi-delta network and the mesh network are superimposed to operate among a plurality of left side switches and a plurality of right side switches.
